# EUROPÄISCHE PATENTSCHRIFT

(11) **EP 2 245 324 B1**
(45) Veröffentlichungstag und Bekanntmachung des Hinweises auf die Patenterteilung: **13.07.2011**
(21) Anmeldenummer: 09714509.8
(22) Anmeldetag: 16.01.2009
(51) Int. Cl.: F16D 13/58

(54) **ANFAHRKUPPLUNG, INSBESONDERE FÜR RENN- UND SPORTFAHRZEUGE**
STARTING CLUTCH, IN PARTICULAR FOR RACING AND SPORTS VEHICLES
EMBRAYAGE DE DÉMARRAGE, EN PARTICULIER POUR VÉHICULES DE COURSE ET DE SPORT

(30) Priorität: 28.02.2008 DE 102008011634
(43) Veröffentlichungstag der Anmeldung: 03.11.2010
(73) Patentinhaber: Bayerische Motoren Werke Aktiengesellschaft, 80809 München (DE)
(72) Erfinder: FISCHER, Klaus, 82131 Stockdorf (DE)
(86) Internationale Anmeldenummer: PCT/EP2009/000236
(87) Internationale Veröffentlichungsnummer: WO 2009/106194

(56) Entgegenhaltungen:
- WO-A-2006/067399
- DE-A1-102006 012 809

## Beschreibung

Die vorliegende Erfindung betrifft eine Anfahrkupplung gemäß dem Oberbegriff des Patentanspruches 1.

Eine derartige Anfahrkupplung ist aus der DE 10 2006 012 809 A1 bekannt.

Bei Sport- und Rennfahrzeugen werden als Anfahrkupplungen üblicherweise Lamellenkupplungen mit einem aus mehreren Einzellamellen bestehenden Lamellenpaket eingesetzt. Um zwischen den Lamellen die für das zu übertragende Drehmoment notwendige Anpresskraft zu erzeugen und gleichzeitig eine kompakte Bauweise der Kupplung zu erreichen werden sehr steife Kupplungsfedern benötigt. Als Kupplungsfedern werden üblicherweise Tellerfedern verwendet, die hintereinander geschichtet angeordnet sind.

Um eine optimale Anfahrbeschleunigung zu erreichen, bedarf es einer exakten Steuerung der Kupplung. Aufgrund der steifen Federcharakteristik des Kupplungsfederpakets verursachen bereits kleine Veränderungen der Ausrückstellung der Kupplung relativ große Veränderungen des übertragbaren Drehmoments. Ist die Kupplung zu weit geöffnet, kann die gewünschte Antriebsleistung erst gar nicht auf die Räder übertragen werden. Ist die Kupplung hingegen zu wenig geöffnet, so besteht die Gefahr, dass zu viel Leistung auf die Antriebsräder übertragen wird, was dann zum Durchdrehen der Antriebsräder und in der Folge zu einem Beschleunigungseinbruch führt. Um eine exaktere Steuerung bzw. Regelung der Kupplung zu ermöglichen, wurde in der DE 10 2006 012 809 vorgeschlagen, dass die Federelemente und das Ausrückelement so beschaffen sind, dass ausgehend vom Schließzustand der Kupplung beim allmählichen Öffnen der Kupplung zunächst nur einen Teil der vorhandenen Federelemente durch das Ausrückelement betätigt wird und erst nach einem weiteren Verschiebeweg weitere bzw. alle vorhandenen Federelemente betätigt werden.

Umgekehrt wird beim Schließen der Kupplung zunächst nur ein Teil der Federelemente ent- bzw. belastet, was die Übertragung eines Teildrehmoments des maximal übertragbaren Drehmoments ermöglicht. Erst nach einem weiteren Verschiebeweg des Ausrückelements werden weitere oder alle Federelemente der Kupplung ent- bzw. belastet, was dann eine Übertragung des maximalen möglichen Kupplungsmoments ermöglicht.

Durch eine derart "gestufte Betätigung" der Federelemente ergibt sich eine entsprechend gestufte Kupplungscharakteristik (übertragbares Drehmoment in Abhängigkeit des Ausrückwegs der Kupplung) mit mindestens einem sich über einen vorgegebenen Verschiebeweg erstreckenden, plateauartigen Kurvenbereich, in dem das von der Kupplung übertragbare Drehmoment bei mechanisch idealen Bedingungen konstant ist oder sich nur relativ wenig über dem Verschiebeweg ändert.

In der Praxis können aber Störeinflüsse auftreten, welche zu beträchtlichen Abweichungen von der theoretisch vorgegebenen Kurvencharakteristik führen können. So können Reibparameter der Kupplung von einem Betätigungsvorgang zum anderen Betätigungsvorgang schwanken. Beim Betätigen des Kupplungsfederpakets kommt es nämlich infolge der Deformierung der Tellerfedern an den Berührflächen der einzelnen Tellerfedern in gewissem Umfang zu einer radialen Relativverschiebung der einander berührenden Tellerfedern. Die dabei auftretenden Reibbedingungen hängen von einer Vielzahl von Parametern wie z. B. der Temperatur, der Schmierung, dem Verschmutzungsgrad etc. ab. Unmittelbaren Einfluss auf die Steuerbarkeit bzw. Regelbarkeit einer Anfahrkupplung haben insbesondere die Reibungsverhältnisse zwischen der vom Lamellenpaket aus gesehen ersten Kupplungsfeder (so genannte Startfeder) und der dahinter angeordneten zweiten Kupplungsfeder.

Aufgabe der Erfindung ist es, die eingangs beschriebene Anfahrkupplung derart zu modifizieren, dass sich die Steuerbarkeit bzw. Regelbarkeit der Kupplung beim Anfahren, d. h. beim Schließen der Kupplung verbessert.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Anfahrkupplung, insbesondere für Renn- und Sportfahrzeuge, mit Kupplungslamellen, von denen mindestens eine drehfest mit einem Kupplungskorb der Anfahrkupplung gekoppelt ist und mindestens eine drehfest mit einer Kupplungsnabe der Anfahrkupplung drehfest gekoppelt ist. Der Kupplungskorb kann unmittelbar an die Kurbelwelle des Motors angeflanscht sein und die Kupplungsnabe kann mit einer Getriebeeingangswelle verbundnen sein. Ferner ist ein Federpaket mit mindestens zwei tellerfederartigen Federelementen vorgesehen, das bei geschlossener Anfahrkupplung die Kupplungslamellen zusammenpresst und eine Drehmomentübertragung vom Kupplungskorb auf die Kupplungsnabe, bzw. umgekehrt, ermöglicht.

Der Erfindung liegt die Erkenntnis zugrunde, dass die Kupplung umso besser steuerbar bzw. regelbar ist, je geringer und je konstanter die Reibungsverhältnisse zwischen den - von den Kupplungslamellen aus gesehen - ersten beiden Federelementen ist. Der Kern der Erfindung besteht darin, dass das von den Kupplungslamellen aus gesehen erste oder zweite Federelement auf seiner dem zweiten bzw. ersten Federelement zugewandten Seite mindestens eine Erhebung aufweist, welche bei geschlossener Anfahrkupplung gegen das zweite bzw. gegen das erste Federelement drückt.

Im Unterschied zum Stand der Technik, z. B. der in der DE 10 2006 012 801 A1 beschriebenen Kupplung, berühren die beiden ersten Federelemente einander also nicht mehr großflächig bzw. vollflächig, sondern an der mindestens einen ersten Erhebung. Dadurch verringert sich die Reibung zwischen den beiden ersten Federelementen. Die Reibungsbedingungen zwischen den beiden ersten Federelementen werden dadurch deutlich konstanter, d. h. sie variieren nicht mehr so stark wie dies bei herkömmlichen Anfahrkupplungen der Fall ist.

Vorzugsweise weist das von den Kupplungslamellen aus gesehen erste oder zweite Federelement auf seiner dem zweiten bzw. ersten Federelement zugewandten Seite mindestens eine zweite Erhebung auf, welche bei geschlossener Anfahrkupplung gegen das zweite bzw. erste Federelement drückt. Die mindestens eine erste Erhebung und die mindestens eine zweite Erhebung weisen einen unterschiedlich großen Abstand von einer Drehachse der Anfahrkupplung auf. Durch die radial voneinander beabstandeten Erhebungen kann ein definierter Abstand zwischen den beiden ersten Federn dargestellt werden. Vorzugsweise sind die beiden Erhebungen in Längsrichtung der Drehachse der Anfahrkupplung gleich "hoch", so dass die beiden ersten Federn, wenn sie gegeneinander gepresst werden, parallel zueinander sind. Alternativ dazu kann auch vorgesehen sein, dass die mindestens eine erste und die mindestens eine zweite Erhebung unterschiedlich hoch sind, was impliziert, dass die Federn, wenn sie gegeneinander gepresst werden, nicht unbedingt zwingend parallel sein müssen.

Nach einer Weiterbildung der Erfindung ist die mindestens eine zweite Erhebung in Bezug auf die Drehachse der Anfahrkupplung radial außerhalb der mindestens einen ersten Erhebung vorgesehen.

Vorzugsweise sind die Erhebungen an der dem zweiten Federelement zugewandten Seite des ersten Federelements vorgesehen.

Die Erhebungen können jeweils die Form eines geschlossenen "schneidenartigen" Rings haben. Alternativ dazu können die mindestens eine erste Erhebung und die mindestens eine zweite Erhebung auch durch mehrere in Umfangsrichtung voneinander beabstandete schneidenartige Ringabschnitte gebildet sein. Anstatt Ringabschnitten sind auch eine Vielzahl von die Erhebungen bildenden "Berührpunkten" denkbar.

Nach einer Weiterbildung der Erfindung ist zwischen dem von den Kupplungslamellen aus gesehen ersten Federelement und der ersten Kupplungslamelle ein ringförmiges Druckelement angeordnet, das die Form einer ringförmigen Druckplatte haben kann. Zwischen der ersten Kupplungslamelle und dem Druckelement bzw. der Druckplatte gibt es einen Bereich höchster Flächenpressung. Vorzugweise hat die mindestens eine erste Erhebung im Wesentlich denselben radialen Abstand von der Drehachse der Anfahrkupplung wie der Bereich der höchsten Flächenpressung. Dadurch ist sichergestellt, dass die von dem ersten Federelement übertragene Anpresskraft optimal in das Druckelement bzw. die Druckplatte der Anfahrkupplung eingeleitet wird. Durch eine flächige Berührung kann die Flächenpressung entsprechend reduziert werden.

Nach einer Weiterbildung der Erfindung weist die Anfahrkupplung ein Ausrückelement auf, das entlang der Drehachse der Kupplung verschieblich ist. Durch Verschieben des Ausrückelements können die Federelemente so deformiert werden, dass die Anfahrkupplung geöffnet wird. Ähnlich wie bei der in der DE 10 2006 012 809 A1 beschriebenen Anfahrkupplung können die Federelemente und das Ausrückelemente so beschaffen sein, dass ausgehend von einer Stellung, in der die Anfahrkupplung vollständig geschlossen ist, beim Verschieben des Ausrückelements dieses zunächst nur einen Teil der Federelemente betätigt und erst nach einem weiteren Verschiebeweg weitere bzw. die übrigen der vorhandenen Federelemente betätigt.

Nach einer Weiterbildung der Erfindung sind die Federelemente und das Ausrückelement so beschaffen, dass ausgehend von einer Stellung, in der die Anfahrkupplung vollständig geschlossen ist, beim Verschieben des Ausrückelements dieses nur das zweite und ggf. vorhandene weitere Federelemente betätigt und erst nach einem weiteren Verschiebeweg das erste Federelement (Startfeder) betätigt.

Ferner kann vorgesehen sein, dass das erste Federelement einen größeren Innendurchmesser aufweist als das zweite Federelement und das Ausrückelement mindestens zwei den beiden Innendurchmessern zugeordnete Mitnahmebereiche bzw. Mitnahmeabschnitte aufweist.

Ausdrücklich sei darauf hingewiesen, dass gesamte Offenbarungsgehalt der DE 10 2006 012 809 A1 als Bestandteil der vorliegenden Patentanmeldung gelten soll. Sämtliche explizit oder implizit in der DE 10 2006 012 809 A1 enthaltenen Merkmale, Ideen oder Teilideen können somit wörtlich oder sinngemäß in die Beschreibung und/oder in die Patentansprüche der vorliegenden Patentanmeldung übernommen werden.

Im Folgenden wird die Erfindung im Zusammenhang mit der Zeichnung näher erläutert.
- Figur 1: zeigt einen Schnitt durch die Tellerfedern einer Anfahrkupplung gemäß der Erfindung; und
- Figur 2: zeigt eine Draufsicht auf die Startfeder einer Anfahrkupplung gemäß der Erfindung.

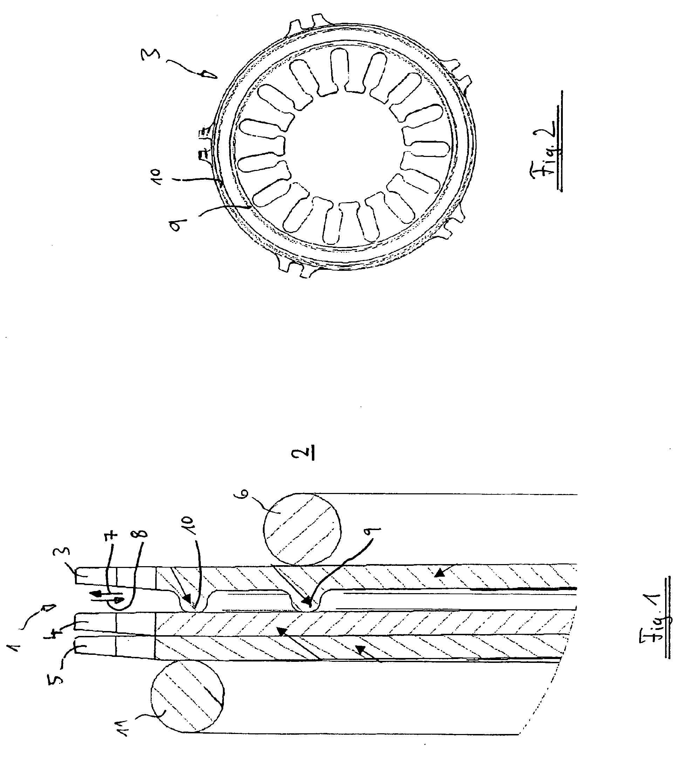

Figur 1 zeigt einen Schnitt durch ein Tellerfederpaket 1 einer Anfahrkupplung für Sport- und Rennfahrzeuge. Das Tellerfederpaket 1 weist eine von einem hier nicht näher dargestellten Kupplungslamellenpaket 2 aus gesehen erste Tellerfeder 3, eine zweite Tellerfeder 4 und eine dritte Tellerfeder 5 auf. Die erste Tellerfeder 3 wird auch als "Startfeder" bezeichnet, da sie beim Schließen der Anfahrkupplung als erste der Tellerfedern 3 - 5 eine Anpresskraft auf das Kupplungslamellenpaket 2 ausübt und somit entscheidend für die Höhe des während des Anfahrens übertragbaren Drehmoments ist. Die "Startfeder" drückt gegen ein Druckelement bzw. eine Druckplatte 6, welche die von dem Tellerfederpaket 1 ausgeübte Anpresskraft auf das hier nicht näher dargestellte Kupplungslamellenpaket 2 überträgt.

Bei einer Betätigung der Anfahrkupplung bzw. des Tellerfederpakets 1 kommt es infolge der Deformierung der Tellerfedern in Radialrichtung der Anfahrkupplung gesehen in begrenztem Umfang zu einer Relatiwerschiebung der Tellerfedern, insbesondere der ersten beiden Tellerfedern 3, 4, was durch Pfeile 7, 8 angedeutet ist. Je geringer die Reibung zwischen den Tellerfedern, insbesondere zwischen der Startfeder 3 und der zweiten Tellerfeder 4 ist, umso präziser kann die Anfahrkupplung während des Anfahrvorgangs gesteuert bzw. geregelt werden. Eine vergleichsweise geringe Reibung zwischen den ersten beiden Tellerfedern 3, 4 lässt sich darstellen, indem eine der beiden einander zugewandten Berührflächen der beiden Tellerfedern 3, 4 mit ringförmig umlaufenden, "schneidenartigen" Erhebungen 9, 10 versehen ist.

Bei dem hier gezeigten Ausführungsbeispiel ist eine erste ringartig umlaufende Erhebung 9 und radial außerhalb davon eine zweite ringförmig umlaufende zweite Erhebung 10 vorgesehen. Die erste Erhebung 9 hat von der Drehachse (nicht dargestellt) der Anfahrkupplung im Wesentlichen denselben Abstand wie der Berührbereich zwischen der ersten Tellerfeder 3 und der Druckplatte 6. Bei dem hier gezeigten Ausführungsbeispiel liegt zwischen der Druckplatte 6 und der ersten Tellerfeder 3 eine Linienberührung vor. Im Prinzip könnten die ersten Tellerfeder 3 und die Druckplatte 6 einander auch flächig berühren. In diesem Fall sollte die erste Erhebung 9 im Wesentlichen desselben radialen Abstand von der Drehachse der Anfahrkupplung haben wie der Bereich, in dem die höchste Flächenpressung zwischen dem ersten Federelement 3 und der Druckplatte 6 auftritt.

Durch die beiden umlaufenden, schneidenartigen Erhebungen 9, 10 ist einerseits gewährleistet, dass die beiden Tellerfedern 3, 4 bei geschlossener Kupplung im Wesentlichen parallel zueinander ausgerichtet sind. Wesentlich ist, dass durch die beiden Erhebungen 9, 10 lediglich zwei Linienberührungen zwischen den beiden ersten Tellerfedern 3, 4 vorliegen, was die Reibung zwischen den Tellerfedern 3, 4 verringert und relativ konstant bleibende Reibverhältnisse zwischen den Tellerfedern 3, 4 ergibt.

Vollständigkeitshalber sei noch eine ringförmige Schneide- bzw. eine ringförmige Abstützung 11 erwähnt, über die die dritte Tellerfeder 5 z. B. gegenüber einem Gehäuse der Anfahrkupplung abgestützt ist.

Figur 2 zeigt eine Draufsicht auf die Startfeder 3 von der zweiten Tellerfeder 4 aus gesehen. Deutlich zu erkennen sind die erste ringförmige umlaufende Erhebung 9 und die radial außerhalb davon angeordnete zweite ringförmige umlaufende Erhebung 10.

## Patentansprüche

1. Anfahrkupplung, insbesondere für Renn- und Sportfahrzeuge, mit
- Kupplungslamellen (2), von denen mindestens eine drehfest mit einem Kupplungskorb der Anfahrkupplung gekoppelt ist und mindestens eine drehfest mit einer Kupplungsnabe der Anfahrkupplung drehfest gekoppelt ist,
- einem aus mindestens zwei tellerfederartigen Federelementen (3 - 5) bestehenden Federpaket (1), das bei geschlossener Anfahrkupplung die Kupplungslamellen (2) zusammenpresst und eine Drehmomentübertragung von dem Kupplungskorb auf die Kupplungsnabe, bzw. umgekehrt, ermöglicht,
**dadurch gekennzeichnet, dass** das von den Kupplungslamellen (2) aus gesehen erste oder zweite Federelement (3, 4) auf seiner dem zweiten bzw. ersten Federelement (4, 3) zugewandten Seite mindestens eine erste Erhebung (9) aufweist, welche bei geschlossener Anfahrkupplung gegen das zweite bzw. erste Federelement (4, 3) drückt.

2. Anfahrkupplung nach Anspruch 1, **dadurch gekennzeichnet, dass** das von den Kupplungslamellen (2) aus gesehen erste oder zweite Federelement (3, 4) auf seiner dem zweiten bzw. ersten Federelement (4, 3) zugewandten Seite mindestens eine zweite Erhebung (10) aufweist, welche bei geschlossener Anfahrkupplung gegen das zweite bzw. erste Federelement (4, 3) drückt.

3. Anfahrkupplung nach Anspruch 2, **dadurch gekennzeichnet, dass** das erste und das zweite Federelement (3, 4) einander bei geschlossener Anfahrkupplung ausschließlich über die Erhebungen (9, 10) berühren.

4. Anfahrkupplung nach Anspruch 2 oder 3, **dadurch gekennzeichnet, dass** die mindestens eine zweite Erhebung (10) in Bezug auf eine Drehachse der Anfahrkupplung radial außerhalb der mindestens einen ersten Erhebung (9) vorgesehen ist.

5. Anfahrkupplung nach einem der vorangehenden Ansprüche, **dadurch gekennzeichnet, dass** die mindestens eine erste Erhebung (9) bzw. dass die Erhebungen (9, 10) an der dem zweiten Federelement (4) zugewandten Seite des ersten Federelements (3) vorgesehen sind.

6. Anfahrkupplung nach einem der vorangehenden Ansprüche, **dadurch gekennzeichnet, dass** zwischen dem ersten Federelement (3) und der ersten Kupplungslamelle ein ringförmiges Druckelement (6) angeordnet ist, wobei es zwischen dem ersten Federelement (3) und dem Druckelement (6) einen Bereich höchster Flächenpressung gibt und die mindestens erste Erhebung (9) im Wesentlichen denselben radialen Abstand von der Drehachse der Anfahrkupplung hat wie der Bereich der höchsten Flächenpressung.

7. Anfahrkupplung nach einem der vorangehenden Ansprüche 1, **dadurch gekennzeichnet, dass** ein Ausrückelement vorgesehen ist, das entlang der Drehachse der Anfahrkupplung verschiebbar ist, wobei durch Verschieben des Ausrückelements die Federelemente (3 - 5) so deformierbar sind, dass die Anfahrkupplung geöffnet wird.

8. Anfahrkupplung nach einem der vorangehenden Ansprüche, **dadurch gekennzeichnet, dass** die Federelemente (3 - 5) und das Ausrückelement so beschaffen sind, dass ausgehend von einer Stellung, in der die Anfahrkupplung vollständig geschlossen ist, beim Verschieben des Ausrückelements dieses nur einen Teil der Federelemente (3 - 5) betätigt und erst nach einem weiteren Verschiebeweg weitere der vorhandenen Federelemente betätigt.

9. Anfahrkupplung nach einem der vorangehenden Ansprüche, **dadurch gekennzeichnet, dass** die Federelemente (3- 5) und das Ausrückelement so beschaffen sind, dass ausgehend von einer Stellung, in der die Anfahrkupplung vollständig geschlossen ist, beim Verschieben des Ausrückelements dieses nur das zweite und ggf. vorhandene weitere Federelemente (4, 5) betätigt und erst nach einem weiteren Verschiebeweg das erste Federelement (3) betätigt.

10. Anfahrkupplung nach einem der vorangehenden Ansprüche, **dadurch gekennzeichnet, dass** das erste Federelement (3) einen größeren Innendurchmesser aufweist als das zweite Federelement (4) und das Ausrückelement mindestens zwei den beiden Innendurchmessern zugeordnete Mitnehmerbereiche aufweist.

## Claims

1. A starting clutch, especially for racing and sports vehicles, comprising
- discs (2), at least one being co-rotatably connected to a cage and at least one being co-rotatably connected to a hub, both belonging to the starting clutch, and
- a spring assembly (1) comprising at least two cup spring-like elements (3 - 5) and which, when the clutch is closed, presses the discs (2) together and transmits torque from the cage to the hub and vice versa,
**characterised in that** the first or second spring element (3, 4), as seen from the discs (2), has at least one first raised portion (9) on its side facing the second or first spring element (4, 3) respectively and pressing against the second or first spring element (4, 3) respectively when the clutch is closed.

2. A clutch according to claim 1, **characterised in that** the first or second spring element (3, 4), as seen from the discs (2), on its side facing the second or first spring element (4, 3) respectively, has at least one second raised portion (10) which presses against the second or first spring element (4, 3) respectively when the clutch is closed.

3. A clutch according to claim 2, **characterised in that** the first and the second spring element (3, 4), when the clutch is closed, are in contact exclusively via the raised portions (9, 10).

4. A clutch according to claim 2 or claim 3, **characterised in that** the at least one second raised portion (10) is disposed radially outside the at least one first raised portion (9) relative to an axis of rotation of the clutch.

5. A clutch according to any of the preceding claims, **characterised in that** the at least one first raised portion (9) or the raised portions (9, 10) are provided on the side of the first spring element (3) facing the second spring element (4).

6. A clutch according to any of the preceding claims, **characterised in that** an annular pressure element (6) is disposed between the first spring element (3) and the first disc, wherein a region of maximum pressure per unit area is formed between the first spring element (3) and the pressure element (6) and the at least first raised portion (9) is substantially at the same radial distance from the axis of rotation of the clutch as the region of maximum pressure per unit area.

7. A clutch according to any of the preceding claims, **characterised in that** a disengaging element is provided and is movable along the axis of rotation of the clutch, wherein the disengaging element can be moved so as to deform the spring elements (3 - 5) so as to open the clutch.

8. A clutch according to any of the preceding claims, **characterised in that** the spring elements (3 - 5) and the disengaging element are so constructed that when the disengaging element is moved, starting from a position in which the clutch is completely closed, the element actuates only a part of the spring elements (3 - 5) and has to be moved a further distance before actuating other spring elements.

9. A clutch according to any of the preceding claims, **characterised in that** the spring elements (3 - 5) and the disengaging element are so constructed that when the disengaging element moves, starting from a position in which the clutch is completely closed, it actuates only the second and any other spring elements (4, 5) and has to move a further distance before actuating the first spring element (3).

10. A clutch according to any of the preceding claims, **characterised in that** the first spring element (3) has a greater inner diameter than the second spring element (4) and the disengaging element has at least two cam regions associated with the two inner diameters.

## Revendications

1. Embrayage de démarrage, notamment pour des véhicules de course et de sport comportant :
- des lamelles d'embrayage (2) dont au moins une est solidaire d'une cage de l'embrayage de démarrage et dont au moins une est solidaire en rotation d'un moyeu de l'embrayage de démarrage par un couplage solidaire en rotation,
- l'un au moins de deux éléments de ressort (3-5) est en forme de coupelle constituant le paquet de ressort (1) et qui lorsque l'embrayage de démarrage est fermé, comprime les lamelles d'embrayage (2) et permet une transmission de couple entre la cage d'embrayage et le moyeu d'embrayage ou réciproquement,
embrayage de démarrage **caractérisé en ce que**
le premier ou le second élément de ressort (3, 4) vus à partir des lamelles d'embrayage (2), présente sur son côté tourné vers le second ou le premier élément de ressort (4, 3) au moins un premier bossage (9) qui, lorsque l'embrayage de démarrage est fermé, pousse contre le second ou le premier élément de ressort (4, 3).

2. Embrayage de démarrage selon la revendication 1,
**caractérisé en ce que**
le premier ou le second élément de ressort (3, 4) vu à partir des lamelles d'embrayage (2), comporte sur son second côté ou premier côté de l'élément de ressort (4, 3), au moins un second bossage (10) qui, lorsque l'embrayage de démarrage est fermé, pousse contre le second ou le premier élément de ressort (4, 3).

3. Embrayage de démarrage selon la revendication 2,
**caractérisé en ce que**
le premier et le second élément de ressort (3, 4) se touchent l'un l'autre uniquement par les bossages (9, 10) lorsque l'embrayage de démarrage est fermé.

4. Embrayage de démarrage selon la revendication 2 ou 3,
**caractérisé en ce qu'**
au moins un second bossage (10) est prévu par référence à un premier axe de rotation comportant l'embrayage de démarrage radialement à l'extérieur d'au moins un premier bossage (9).

5. Embrayage de démarrage selon l'une des revendications précédentes,
**caractérisé en ce qu'**
au moins un premier bossage (9) ou les bossages (9, 10) sont prévus sur le côté du premier élément de ressort (3) tourné vers le second élément élastique (4).

6. Embrayage de démarrage selon l'une des revendications précédentes,
**caractérisé par**
un élément de poussée (6), annulaire, installé entre le premier élément de ressort (3) et la première lamelle d'embrayage, et
entre le premier élément de ressort (3) et le second élément de poussée (6), il existe une zone avec la pression surfacique la plus élevée et au moins le premier bossage (9) est en principe à la même distance radiale de l'axe de rotation de l'embrayage de démarrage, que la zone de pression surfacique la plus élevée.

7. Embrayage de démarrage selon la revendication 1,
**caractérisé par**
un élément de débrayage qui se coulisse le long de l'axe de rotation de l'embrayage de démarrage, le coulissement de l'élément de dégagement déformant les éléments de ressort (3-5) pour ouvrir l'embrayage de démarrage.

8. Embrayage de démarrage selon l'une des revendications précédentes,
**caractérisé en ce que**
les éléments de ressort (3-5) et l'élément de débrayage sont créés pour que partant d'une position dans laquelle l'embrayage de démarrage est complètement fermé, en coulissant l'élément de débrayage, celui-ci n'actionne qu'une fraction de l'élément de ressort (3-5) et ce n'est qu'après un autre coulissement, que d'autres éléments de ressort seront actionnés.

9. Embrayage de démarrage selon l'une des revendications précédentes,
**caractérisé en ce que**
l'élément de ressort (3-5) et l'élément de débrayage sont conçus pour que partant d'une position dans laquelle l'embrayage de démarrage est complètement fermé, lorsqu'on ferme l'élément de débrayage, celui-ci n'actionne que le second élément de ressort (4, 5) et le cas échéant d'autres éléments de ressort et ce n'est qu'après un autre coulissement, que le premier élément de ressort (3) est actionné.

10. Embrayage de démarrage selon l'une des revendications précédentes,
**caractérisé en ce que**
le premier élément de ressort (3) a un diamètre intérieur plus grand que le second élément de ressort (4) et l'élément de dégagement comporte au moins deux zones d'entraînement associées aux deux diamètres intérieurs.
